# EUROPÄISCHE PATENTANMELDUNG

(11) **EP 0 849 522 A2**
(43) Veröffentlichungstag der Anmeldung: **24.06.1998**
(21) Anmeldenummer: 97120709.7
(22) Anmeldetag: 26.11.1997
(51) Int. Cl.: F17C 13/02

(54) **Verfahren und Vorrichtung zum Überwachen der Befüllung eines Kryotanks**

(30) Priorität: 19.12.1996 DE 19653048
(71) Anmelder: MESSER GRIESHEIM GMBH, 60547 Frankfurt (DE); Bayerische Motoren Werke Aktiengesellschaft, 80788 München (DE)
(72) Erfinder: Hettinger, Wolfgang, 50769 Köln (DE); Moser, Friedrich, 47167 Duisburg (DE); Pehr, Klaus, 86391 Stadtbergen (DE); Tachtler, Joachim, 85737 Ismaning (DE)

(57) **Zusammenfassung**

Die Erfindung sieht ein Verfahren und eine Vorrichtung zum Überwachen der Befüllung eines Tanks mit einem flüssigen, tiefkalten Gas vor, bei denen die Temperatur und der Druck des flüssigen Gases im Tank erfaßt werden und die Masse des flüssigen Gases im Tank aus der Temperatur und dem Volumen abgeleitet wird. Im Stand der Technik wurde als Füllstandsbegrenzung ein System mit Überlauf verwendet, wobei die Überlaufhöhe die maximale Volumenzunahme berücksichtigte. Weil bei der Begrenzung des Füllstands nur dichteunabhängig die Phasengrenze ermittelt wird, muß der maximal zulässige Füllstand die maximal mögliche Volumenzunahme des Flüssiggases berücksichtigen. Mit dem erfindungsgemäßen System ist eine bessere Ausnutzung des Tankvolumens möglich, weil die tatsächlich mögliche Volumenzunahme aufgrund des tatsächlich herrschenden Druck- und Temperaturzustandes des eingefüllten Flüssiggases berücksichtigt wird.

## Beschreibung

Die Erfindung betrifft ein Verfahren und eine Vorrichtung zum Überwachen der Befüllung eines Tanks mit einem flüssigen Gas.

Flüssiggastanks, oder Kryotanks, weisen einen isolierten Vorratsbehälter auf, in dem verflüssigtes, tiefkaltes Gas unter Überdruck gespeichert werden kann. Beispiele für flüssige Druckgase sind verflüssigter Wasserstoff (LH₂), flüssiges Erdgas (LNG) und flüssiger Stickstoff (LN₂). Die tiefe Temperatur der verflüssigten Gase wird durch eine Vakuumisolation des Vorratsbehälters über längere Zeitspannen aufrechterhalten. Kryotanks werden beispielsweise in der Kraftfahrzeugtechnik als Treibstofftanks eingesetzt.

Es gibt verschiedene Normen, welche eine Füllhöhenbegrenzung für Flüssiggasspeicher vorschreiben. Beispielsweise in der ISO/WD 13985 vom 15.12.1994 für Flüssigwasserstoff-Tanks wird festgelegt, daß der Tank mit einer Füllstandsmessung auszurüsten ist. Dadurch soll sichergestellt werden, daß der Tank nicht überfüllt wird. Ziel ist es, den Betankungsvorgang bei 98% der maximal zulässigen Füllhöhe zu beenden. Laut der Norm TRG 103 für flüssige, tiefkalte Druckgase darf in einen Tank nur soviel Flüssiggas eingefüllt werden, daß bei Ansprechdruck der am Tank vorgesehenen Druckhalteventile dieser zu maximal 95 % gefüllt ist.

Da der Druck und das Volumen des Flüssiggases mit steigender Temperatur zunehmen, muß beim Betanken des Speicherbehälters in jedem Fall sichergestellt sein, daß die maximale Füllhöhe auch bei Erreichen des maximal zulässigen Speicherinnendrucks nicht überschritten wird. Die Menge an Flüssiggas, welche maximal in einen Tank eingefüllt werden darf, ist somit von Druck und Temperatur des Flüssiggases beim Einfüllen und der während des Betriebs theoretisch möglichen Volumenzunahme bis zum Erreichen des maximalen Tankdrucks abhängig.

Im Stand der Technik wurde als Füllstandsbegrenzung bisher ein System mit Überlauf verwendet, wobei die Überlaufhöhe die maximale Volumenzunahme berücksichtigte. Weil bei dieser Art der Erfassung oder Begrenzung des Füllstands nur dichteunabhängig die Phasengrenze ermittelt wird, muß der maximal zulässige Füllstand so ausgelegt sein, daß noch die maximal mögliche Volumenzunahme des Flüssiggases möglich wäre. Wenn beispielsweise unterkühlter verflüssigter Wasserstoff mit der Siedetemperatur von 1 bar bei einem Druck von 15 bar in den Tank eingefüllt wird, so darf der Tank höchstens zu 65 % gefüllt werden. Wenn der Flüssigwasserstoff allmählich seinen Gleichgewichtszustand annimmt und sich bis zur Siedetemperatur von 15 bar erwärmt, dehnt sich sein Volumen bei Umgebungsdruck bis auf ungefähr 95 % des Tankvolumens aus.

Da die herkömmliche Füllstandsbegrenzung mit Überlauf immer die theoretisch maximal mögliche Volumenzunahme des Flüssiggases berücksichtigt, kann entsprechend weniger Masse gespeichert werden, als wenn die tatsächlich mögliche Volumenzunahme aufgrund des tatsächlich herrschenden Druck- und Temperaturzustandes des eingefüllten Flüssiggases berücksichtigt würde.

So errechnet sich z.B. die maximal zulässige Füllmenge Flüssigwasserstoff bei einem 140-Liter-Tank mit einem zulässigen Druck von 6 bar zu 7,8 kg, entsprechend 110 Liter, bei einem Siededruck von 1 bar. Da nur das Volumen im Speichertank gemessen wird und die theoretisch maximal mögliche Volumenzunahme bei Erhöhung des Drucks vom Umgebungsdruckniveau auf den maximal zulässigen Druck berücksichtigt werden muß, können z.B. bei 3 bar Siededruck nur 7,2 kg und bei 6 bar Siededruck nur 6,5 kg gespeichert werden.

Aufgabe der Erfindung ist daher eine Vorrichtung und ein Verfahren zum Befüllen eines Tanks mit einem flüssigen Gas anzugeben, welche eine optimale Ausnutzung der Speicherkapazität des Tankes bieten.

Diese Aufgabe wird durch ein Verfahren gemäß Anspruch 1 und eine Vorrichtung gemäß Anspruch 9 gelöst.

Erfindungsgemäß ist vorgesehen, die Temperatur und das Volumen des flüssigen Gases im Tank zu erfassen und daraus die Masse des flüssigen Gases im Tank abzuleiten. Die Flüssigkeitstemperatur und der Flüssigkeitsdruck haben längs der Siedekurve ein bekanntes funktionales Verhältnis zueinander. Zwar ist das Flüssiggas beim Umfüllen nicht im Gleichgewichtszustand, die Flüsigkeitsmasse kann jedoch mit ausreichender Genauigkeit ermittelt werden, wenn der der gemessenen Temperatur entsprechende Siededruck angenommen wird. Durch Erfassung der Flüssigkeitstemperatur kann somit der volumetrische Meßwert, welcher beispielsweise von einer Füllstandssonde abgeleitet wird, in eine Masse umgerechnet werden, indem aus der Temperatur der Siededruck und daraus die Dichte des Flüssiggases (abhängig von Druck und Temperatur) abgeleitet wird. Eine noch genauere Bestimmung der Flüssiggasmasse ergibt sich, wenn auch der Druck des Flüssiggaes beim Umfüllen erfaßt und für die Berechnung der Masse direkt verwendet wird.

Hierzu wird eine Verarbeitungseinheit vorgesehen, welche einerseits eine Anzeige für die Füllhöhe des flüssigen Gases im Tank vorsieht und andererseits eine Betankungsanlage zum Füllen des Kryotanks mit flüssigem Gas überwachen kann. Die Verarbeitungseinheit vergleicht den aktuellen massebezogenen Füllgrad des Tanks mit einem in der Verarbeitungseinheit abgelegten Maximalwert und sendet bei Erreichen des Maximalwertes einen Abschaltbefehl an die Betankungsanlage.

Bei einer bevorzugten Ausführungsform überprüft die Verarbeitungseinheit während des Betriebs des Speichertanks laufend die Plausibilität des Temperaturmeßwertes. Hierzu wird zusätzlich zur Temperatur der Siededruck des im Speichertank enthaltenen Flüssiggases erfaßt, und Temperatur und Druck werden anhand der in der Verarbeitungseinrichtung gespeicherten Siedekurve für das Flüssiggas überprüft. Nach einer gewissen Betriebsdauer des Tanks, insbesondere bei dessen Verwendung als Kraftfahrzeugtank, bewirkt die Fahrbewegung, daß das Flüssiggas in den Gleichgewichtszustand kommt, bei dem Druck und Temperatur des Gases genau das durch die Siedekurve bestimmte Verhältnis haben. Falls festgestellt wird, daß die gemessene Temperatur nicht mit dem entsprechenden Druck der Siedekurve zusammenfällt, wird eine fehlerhafte Temperaturmessung diagnostiziert, und das Verfahren zum Überwachen der Befüllung des Tankes auf der Basis der Masse des flüssigen Gases im Tank wird gesperrt. Es wird eine Fehlermeldung ausgegeben, und der Tankvorgang wird nun, wie aus dem Stand der Technik bekannt, bei einem in der Verarbeitungseinheit gespeicherten maximalen Füllstand abgeschaltet. Dieser entspricht dem minimalen Siededruck.

Als Sicherheitsmaßnahme bei Ausfall oder Störung der Temperaturmeßeinrichtung erfolgt dann die Füllstandsbegrenzung nach dem Prinzip des Überlaufs bei einer Füllhöhe, welche die maximale Volumenzunahme bei minimalem Siededruck berücksichtigt. Diese "Überlauf"-Füllstandsbegrenzung kann elektronisch durch die Verarbeitungseinheit durchgeführt werden. Alternativ oder zusätzlich kann eine zuschaltbare mechanische Füllhöhenbegrenzung mit Überlauf vorgesehen werden.

Eine Hauptschwierigkeit bei der Speicherung von verflüssigtem Erdgas, Wasserstoff und dergleichen besteht, im Vergleich zu herkömmlichen Kraftstoffen, in der aufwendigen Speichertechnik. Durch das erfindungsgemäße Verfahren und die Vorrichtung zum Überwachen der Befüllung eines Tankes mit flüssigem Gas wird eine optimale Ausnutzung der Speicherkapazität des Flüssiggastanks möglich. Dadurch ergibt sich ein erheblicher Vorteil bei der Speicherausnutzung gegenüber dem Stand der Technik.

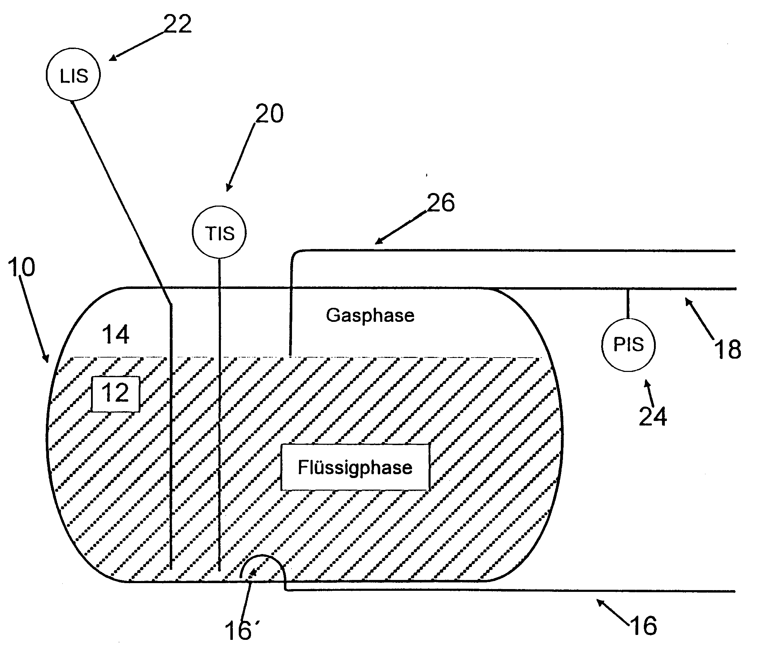

Die Erfindung ist im folgenden anhand eines bevorzugten Ausführungsbeispiels mit Bezug auf die Zeichnung näher erläutert. Die einzige Figur zeigt:

Einen Flüssiggastank mit einer Vorrichtung zum Überwachen des Füllstandes des Tanks gemäß der Erfindung.

In der Figur ist eine Ausführungsform der erfindungsgemäßen Vorrichtung zum Überwachen der Befüllung eines Tanks dargestellt. Ein Kryotank 10 enthält tiefkaltes, verflüssigtes Gas 12, beispielsweise flüssiges Erdgas oder flüssigen Wasserstoff. Über der flüssigen Phase 12 befindet sich eine Gasphase 14 des kalten Gases. Der Kryotank 10 ist von einem (nicht gezeigten) Vakuumisolationsmantel umgeben. Eine Entnahmeleitung 16 mit einem Steigrohrabschnitt 16' ist für die Entnahme von flüssigem Gas vorgesehen. Diese Leitung 16 kann auch zum Zuführen von Gas verwendet werden. Gasförmiges kaltes Gas wird über eine Entnahmeleitung 18 abgeführt. Ferner sind in der Figur ein Temperatursensor 20, ein Füllhöhensensor 22 und ein Druckaufnehmer 24 gezeigt. Schließlich ist noch ein Überlaufrohr 26 als eine mechanische Füllhöhenbegrenzung vorgesehen.

Die Rohrleitungen 16, 18 und 26 für die Flüssigkeitszufuhr und - entnahme, die Gasentnahme bzw. den Überlauf weisen (nicht gezeigte) Regel- oder Absperrventile auf. Die Erfindung sieht vor, daß beim Füllen des Tanks während des Normalbetriebs die Gasleitung 18 und die Überlaufleitung 26 geschlossen und die Flüssigkeitsleitung 16 geöffnet ist. Während des Befüllens erfassen der Temperatursensor 20 und der Füllhöhensensor 22 kontinuierlich die Temperatur und die Füllhöhe des flüssigen Gases 12 im Tank 10. Diese Information leiten sie an eine (nicht gezeigte) Verarbeitungseinheit weiter. Die Verarbeitungseinheit ermittelt anhand der bekannten Siedekennlinie für das Flüssiggas den Siededruck des Flüssiggases aus der gemessenen Temperatur. Wenn Druck und Temperatur des Flüssiggases 12 bekannt sind, läßt sich daraus leicht dessen Dichte ableiten. In der Verarbeitungseinheit sind die geometrischen Abmessungen des Tanks 10 gespeichert, so daß aus der vom Füllhöhensensor 22 ermittelten Füllhöhe das Flüssiggasvolumen im Tank 10 berechnet werden kann. Die Verarbeitungseinheit leitet dann aus der Gasdichte und dem Gasvolumen die Masse des flüssigen Gases im Tank 10 ab. Bei Erreichen eines Maximalwertes, der unabhängig von Temperatur und Druck des Gases immer konstant ist, wird ein Absperrventil in der Leitung 16 geschlossen und die Befüllung des Tanks 10 abgebrochen. Die Begrenzung der Befüllung durch den massebezogenen Maximalwert führt bei jedem Einfüllzustand (Druck und Temperatur) des flüssigen Gases zur maximal zulässigen Füllhöhe im Tank 10, wie bereits erläutert wurde.

Bei einer abgewandelten Ausführungsform der Erfindung wird die Masse des flüssigen Gases im Tank nicht nur auf der Basis der Temperatur und des Füllstandes des Gases ermittelt, sondern auch der Druck des eingefüllten Gases wird gemessen und für die Berechnung der Masse verwendet.

Die erfindungsgemäße Vorrichtung zum Überwachen der Befüllung eines Tanks begrenzt somit die Füllmenge, und Füllhöhe, des flüssigen Gases 12 im Tank immer auf einen Wert, der die tatsächliche Volumenzunahme bis zum zulässigen Höchstdruck im Tank, beispielsweise 6 bar, berücksichtigt.

Zusätzlich führt die erfindungsgemäße Vorrichtung eine laufende Überwachung der Temperaturmessung durch. Hierzu wird kontinuierlich die Temperatur des flüssigen Gases 12 mit dem Temperatursensor 20 und der Druck im Tank 10 mit dem Druckaufnehmer 24 erfaßt. Druck und Temperatur werden anhand der für das jeweilige Flüssiggas geltenden Siedekennlinie verglichen. Wie erläutert, ist das Flüssiggas nach einer gewissen Betriebsdauer im Gleichgewichtszustand, d. h. es hat Siededruck und Siedetemperatur. Wenn sich eine Abweichung der Temperatur von der Siedekennlinie, welche dem erfaßten Druck entspricht, ergibt, wird eine Störung des Temperatursensors 20 diagnostiziert und die erfindungsgemäße Überwachungsvorrichtung wird abgeschaltet. Falls eine Betankung des Tanks 10 mit Flüssiggas erwünscht wird, nachdem die Störung erkannt wurde, kann diese nur noch bis zu einem festen vorgegebenen Füllstand erfolgen, der die theoretisch maximal mögliche Volumenzunahme des Flüssiggases berücksichtigt, d.h. in der Regel eine Ausdehnung des Gases bei einem Übergang vom maximalen Einfülldruck (z.B. 15 bar) bis zum Umgebungsdruck (1 bar). Diese Begrenzung auf einen festen maximalen Füllstand kann entweder von der Verarbeitungseinheit auf der Basis eines Signals vom Füllhöhensensor 22 erfolgen oder als mechanische Füllhöhenbegrenzung durch Zuschalten des Überlaufs 26.

Die in der obigen Beschreibung, der Zeichnung und den Ansprüchen offenbarten Merkmale können sowohl einzeln als auch in beliebiger Kombination für die Realisierung der Erfindung von Bedeutung sein.

## Patentansprüche

1. Verfahren zum Überwachen der Befüllung eines Tanks (10) mit einem flüssigen Gas (12), bei dem
die Temperatur und das Volumen des flüssigen Gases im Tank (10) ermittelt werden, und
die Masse des flüssigen Gases im Tank aus der Temperatur und dem Volumen abgeleitet wird.

2. Verfahren nach Anspruch 1,
dadurch gekennzeichnet,
daß zum Berechnen der Masse des flüssigen Gases der der ermittelten Temperatur entsprechende Siededruck als Gasdruck angenommen wird.

3. Verfahren nach Anspruch 1,
dadurch gekennzeichnet,
daß der Druck des flüssigen Gases gemessen und für die Berechnung der Masse des flüssigen Gases verwendet wird.

4. Verfahren nach einem der vorangehenden Ansprüche,
dadurch gekennzeichnet,
daß während der Betankung des Tanks (10) mit flüssigem Gas (12) die Masse des flüssigen Gases kontinuierlich ermittelt und mit einem Grenzwert verglichen wird und bei Erreichen des Grenzwertes der Tankvorgang abgebrochen wird.

5. Verfahren nach einem der vorangehenden Ansprüche,
dadurch gekennzeichnet,
daß zum Ermitteln des Gasvolumens die Füllhöhe des flüssigen Gases (12) erfaßt und abhängig von der Geometrie des Tanks (10) das Gasvolumen berechnet wird.

6. Verfahren nach Anspruch 5,
dadurch gekennzeichnet,
daß die Füllhöhe des flüssigen Gases (12) angezeigt wird.

7. Verfahren nach einem der vorangehenden Ansprüche,
dadurch gekennzeichnet,
daß als Gas ein tiefkaltes Druckgas, insbesondere füssiger Wasserstoff (LH₂), flüssiges Erdgas (LNG) oder flüssiger Stickstoff (LN₂) verwendet wird.

8. Verfahren nach einem der vorangehenden Ansprüche,
dadurch gekennzeichet,
daß die Temperatur und der Druck des flüssigen Gases während des Betriebs des Tanks (10) kontinuierlich überwacht und anhand der Siedekennlinie für das Gas überprüft werden, und daß dann, wenn sich eine Abweichung der Temperatur von der Siedekennlinie, die dem erfaßten Druck entspricht, festgestellt wird, die Befüllung des Tanks (10) nur noch bis zu einem vorgegebenen Grenzwert für den Füllstand zugelassen wird.

9. Vorrichtung zum Überwachen der Befüllung eines Tanks (10) mit
einem flüssigen Gas, mit
einer Temperaturmeßeinrichtung (20) zum Erfassen der Temperatur des flüssigen Gases im Tank,
einer Füllstandsmeßeinrichtung (22) zum Ermitteln der Füllhöhe des flüssigen Gases im Tank und
einer Verarbeitungseinheit zum Ableiten der Masse des flüssigen Gases im Tank aus der Temperatur und der Füllhöhe.

10. Vorrichtung nach Anspruch 9,
gekennzeichnet durch
eine Druckmeßvorrichtung (24) zum Erfassen des Drucks des flüssigen Gases im Tank, welche mit der Verarbeitungseinheit verbunden ist.

11. Vorrichtung nach Anspruch 9 oder 10,
dadurch gekennzeichnet,
daß die Verarbeitungseinheit einen Vergleicher aufweist, um die Masse des flüssigen Gases (12) mit einem Grenzwert zu vergleichen und ein Signal auszugeben, wenn der Grenzwert erreicht ist.

12. Vorrichtung nach einem der Ansprüche 9 bis 11,
gekennzeichnet durch
eine Vorrichtung zum Anzeigen der Füllhöhe des flüssigen Gases im Tank.

13. Vorrichtung nach einem der Ansprüche 9 bis 12,
dadurch gekennzeichnet,
daß das Gas ein tiefkaltes Druckgas, insbesondere füssiger Wasserstoff (LH₂), flüssiges Erdgas (LNG) oder flüssiger Stickstoff (LN₂), ist.

14. Vorrichtung nach Anspruch 11,
gekennzeichnet durch
eine zuschaltbare Überlaufeinrichtung (26).
